# DEMANDE DE BREVET EUROPEEN

(11) **EP 1 348 648 A1**
(43) Date de publication de la demande: **01.10.2003**
(21) Numéro de dépôt: 02100309.0
(22) Date de dépôt: 27.03.2002
(51) Int. Cl.: B65G 11/06, B65G 11/18

(54) **Toboggan hélicoidal de transfert et de stockage**

(71) Demandeur: ELVECO msj S.A., B-1200 Bruxelles (BE)
(72) Inventeur: Lhoest, Willy Elveco-MSJ S.A., 1200 Bruxelles (BE)
(74) Mandataire: Van Straaten, Joop

(57) **Abrégé**

Un toboggan hélicoïdal de transfert de produits en vrac, notamment de type granuleux ou pulvérulent comprenant au moins une piste (2) en hélicoïde se développant autour d'un axe (Z) vertical ; chaque piste (2) est inclinée transversalement en direction de l'axe (Z), l'angle d'inclinaison (α) de la piste (2) étant tel que les particules de matériau transporté dévient vers l'axe (Z) lorsque la force centrifuge qui les maintient à l'origine sur la piste (2) s'annule ou descend au-dessous d'une valeur critique.

## Description

L'invention concerne les toboggans de transfert et les dispositifs de stockage pour produits et articles en vrac, essentiellement pour les industries chimiques, pharmaceutiques et alimentaires.

On entend par produits et articles en vrac essentiellement des petits articles ainsi que des produits sous forme granulaires ou pulvérulentes et notamment des articles tels que les comprimés de forme quelconque, les gélules, capsules, spansules, pellets, etc.

Ces toboggans sont utilisés en général en conjonction avec des dispositifs de transfert ou de stockage. Leur utilité est d'absorber l'énergie cinétique des articles ou produits déversés en vrac, de façon à réduire les bris et le tassement, particulièrement préjudiciables lorsqu'il s'agit notamment de comprimés de formes complexes et/ou fragiles (rhomboïdales, etc.) et/ou anguleuses.

Nombre de fabricants ont opté pour des toboggans de forme hélicoïdale. Ces toboggans hélicoïdaux se développent généralement autour d'une colonne centrale (voir US 5,598,914; US 4,726,546). D'autres, tels que US 5,083,651 ou GB 2 213 806 ont développé des toboggans hélicoïdaux à axe évidé. Ces toboggans présentent, en coupe, une section en L ou en U. La hampe du L, formant une piste, est disposée radialement par rapport à l'axe de la spirale, la branche du L, formant une bordure latérale étant disposée en substance parallèlement à l'axe de 1' hélicoïde.

L'efficacité des toboggans hélicoïdaux connus est limitée par des caractéristiques intrinsèques, liées à la forme et aux dimensions des produits manutentionnés. Ainsi, des granulés sphériques auront un comportement à l'écoulement bien différents de celui de pastilles ou de capsules rhomboïdales. L'état de surface des articles a également son importance. En conséquence, chaque toboggan doit être normalement adapté à un type de produit. Si ce n'est pas le cas, il se produit des interruptions et des empilements qui limitent l'utilité de ce genre de dispositif ou, à la limite, rendent son usage néfaste, d'une part parce qu'il entrave un empilement régulier, d'autre part parce qu'il entraîne un pourcentage important de bris. Les toboggans de l'état de la technique comprennent différents artifices (interruption de la piste, etc.) censés limiter l'effet de ces phénomènes. De plus ces toboggans étant très étroits, ils ne peuvent jouer le rôle de baffles ou de supports pour mieux distribuer la charge.

Le but de l'invention est la mise au point d'un toboggan de transfert hélicoïdal qui soit adapté à la manipulation d'une grande variété de produits ou d'articles et permette un écoulement et un empilement régulier et limitant la casse d'articles fragiles.

L'objet de l'invention est un toboggan hélicoïdal de transfert de produits en vrac comprenant au moins une piste hélicoïdale se développant autour d'un axe vertical dans lequel le volume central du toboggan est évidé en forme de puits ; chaque piste est continue et présente un pas en substance constant ;chaque piste est inclinée transversalement en direction de l'axe ; l'angle d'inclinaison de la piste est tel que les particules de matériau transféré, animées à la partie supérieure de chaque hélicoïde d'une vitesse suffisante pour que la force centrifuge maintienne le produit le long de la piste correspondante, dévient vers l'axe lorsque la force centrifuge qui les maintient sur la piste s'annule ou descend au-dessous d'une valeur critique.
L'avantage de cette disposition est qu'il ne se produit pas d'empilement d'articles le long de l'hélicoïde : tout article subissant un arrêt inopiné (du fait du frottement, d'une forme irrégulière, etc.), s'évacue de lui-même vers le "puits" central. On peut donc le doter d'une piste large, ce qui permet un débit important en même temps qu'un support substantiel contre la compaction et l'écrasement.

Suivant un mode de réalisation préféré, au moins un dispositif de chargement, qui comprend de préférence un tronçon vertical conférant la vitesse nécessaire au produit transporté, injecte le produit transporté quasi-tangentiellement à chaque piste à la partie supérieure de chaque hélicoïde avec une vitesse suffisante pour que la force centrifuge maintienne le produit le long de la piste correspondante.

De façon avantageuse, l'angle d'inclinaison α de chaque hélicoïde est supérieur ou égal à l'angle de repos du produit transporté, ce qui assure un remplissage uniforme du volume de stockage.

Suivant un mode de réalisation préféré, l'inclinaison α du revers de chaque piste en hélicoïde est légèrement inférieure ou égale à l'angle de repos du produit transporté. Ceci permet d'alléger la pression exercée sur les produits situés à la base de chaque empilement.

Suivant un mode de réalisation avantageux, le toboggan de l'invention est muni d'un mécanisme permettant de faire varier l'inclinaison transversale α de chaque piste.

Ce dispositif comprend de préférence des tringles reliées à chaque piste par des liaisons articulées.

Ce mécanisme peut notamment comprendre des tringles dont la longueur est ajustable.

Chacune des pistes hélicoïdale peut, avantageusement, être munie d'un rebord extérieur.

Un autre objet de l'invention est une enceinte de stockage et de déchargement à vidange par le bas muni d'un toboggan tel que décrit ci-dessus. L'avantage d'une telle enceinte est que le taux de bris et d'écrasement des produits est considérablement réduit, tant au transfert qu'au stockage.

D'autres particularités et avantages de l'invention ressortiront de la description ci-après de modes de réalisation particuliers de l'invention, référence étant faite aux dessins annexés dans lesquels :
La fig. 1 est une vue schématique en élévation d'un toboggan selon l'invention.
La fig. 2 est une vue en plan d'une enceinte de stockage munie d'un toboggan selon l'invention.
La fig. 3 est une vue en élévation avec arrachement de l'enceinte de stockage de la fig.2.
La fig. 4 est une vue schématique en élévation d'un toboggan de l'invention après variation de l'angle de la piste hélicoïdale.
La fig. 5 est une vue en plan d'une autre forme d'une enceinte de stockage munie d'un toboggan à trois pistes selon l'invention.
Les Fig. 6, 7 et 8 sont des vues développées du système de tringlerie d'un toboggan suivant l'invention à des angles d'inclinaison différents.
La fig. 9 est une vue en élévation avec arrachement de l'enceinte de stockage de la fig.3 montrant l'empilement des articles.
Les Fig. 10 et 11 sont des vues de détails des liaisons des tringles montrées à la Fig.3.

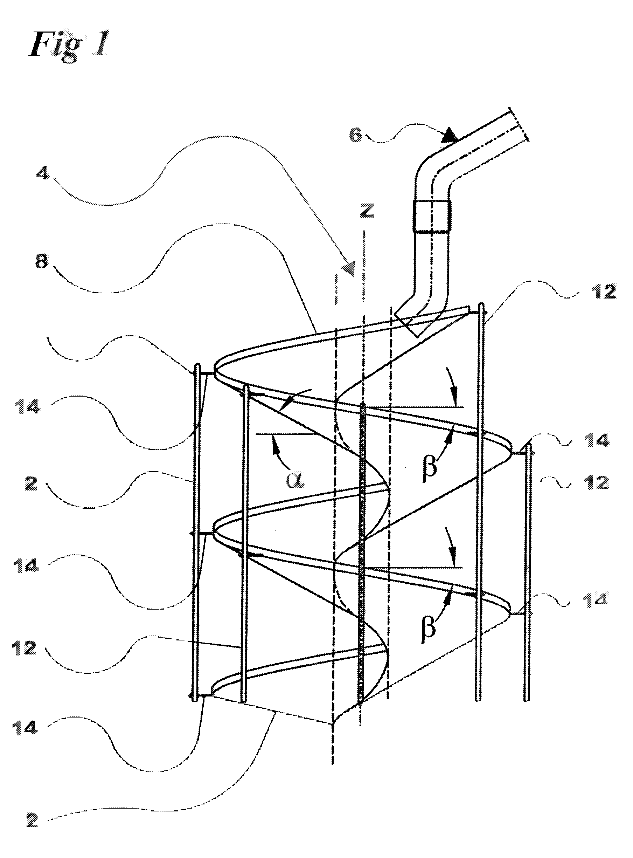

Le toboggan représenté à la Fig. 1 comprend une large piste hélicoïdale 2 se développant autour d'un axe vertical Z. Cette piste 2 ne va pas jusqu'à l'axe Z : le centre de 1' hélicoïde est évidé en forme de puits 4.

Un dispositif de chargement 6 situé au-dessus de la piste 2 déverse le produit ou les articles à stocker quasi-tangentiellement à la piste 2, avec une vitesse initiale déterminée.

Le trajet d'un article ou d'une particule de produit dégringolant le long de la piste 2 est déterminé par trois forces : la gravité qui tend à l'entraîner partiellement le long de la piste et partiellement vers l'axe Z, la force centrifuge qui tend à l'éloigner de l'axe Z et le frottement. De ces trois forces, c'est le frottement qui est la donnée la plus aléatoire. Il est en effet rare que les articles se présentent sous la forme idéale de sphères parfaites. Ils se présentent plus généralement sous des formes donnant lieu à une grande dispersion de comportements dynamiques. Ainsi, un comprimé en forme de disque épais peut aussi bien rouler sur sa tranche avec une très grande vélocité que glisser lentement sur l'une de ses faces.

Le toboggan de l'invention est conçu pour réduire considérablement les problèmes liés à une telle dispersion.

On s'arrange tout d'abord pour que, lorsqu'ils prennent contact avec la piste 2, les articles ou particules soient animés d'une vitesse adéquate pour que la force centrifuge en maintienne une majorité sur la piste 2 du haut en bas du toboggan. Ce résultat est obtenu notamment par la présence et la conception du dispositif de chargement 6. Dans le dispositif 6 représenté à la Fig. 1, c'est le passage dans un conduit vertical de hauteur H prédéterminée qui confère aux articles la vitesse initiale nécessaire.

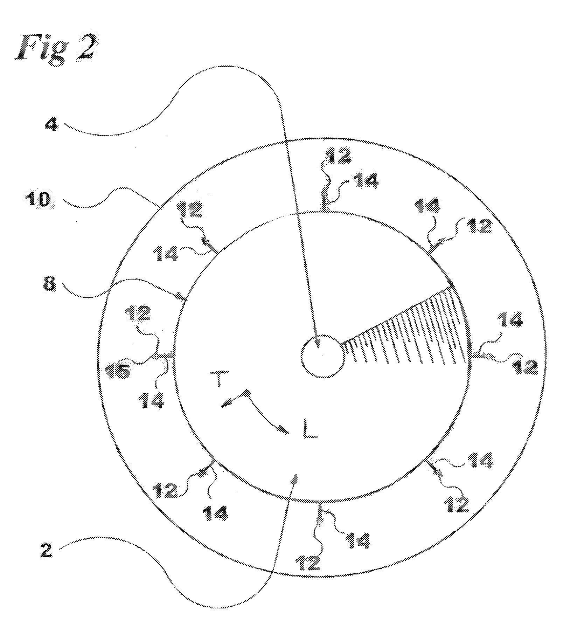

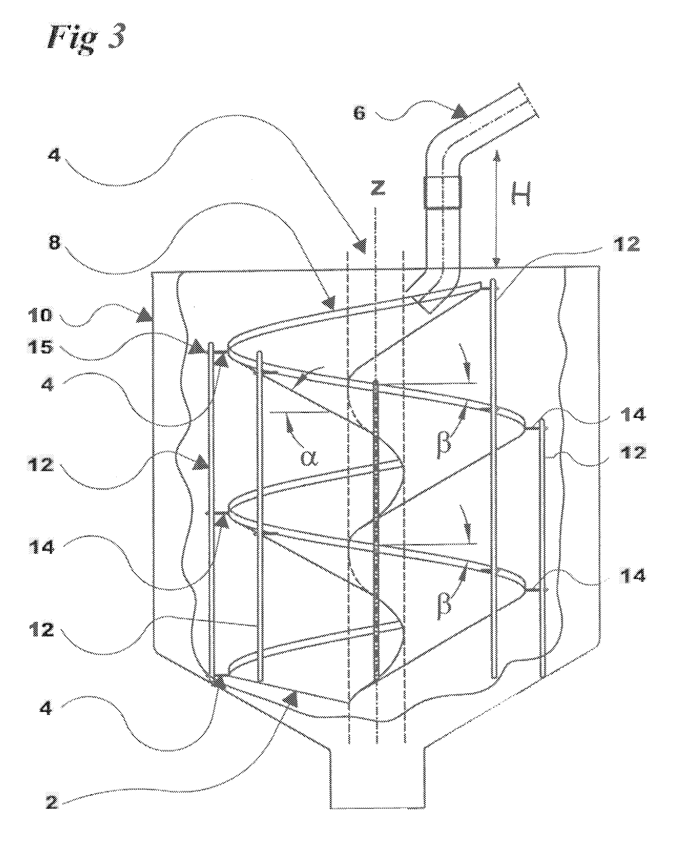

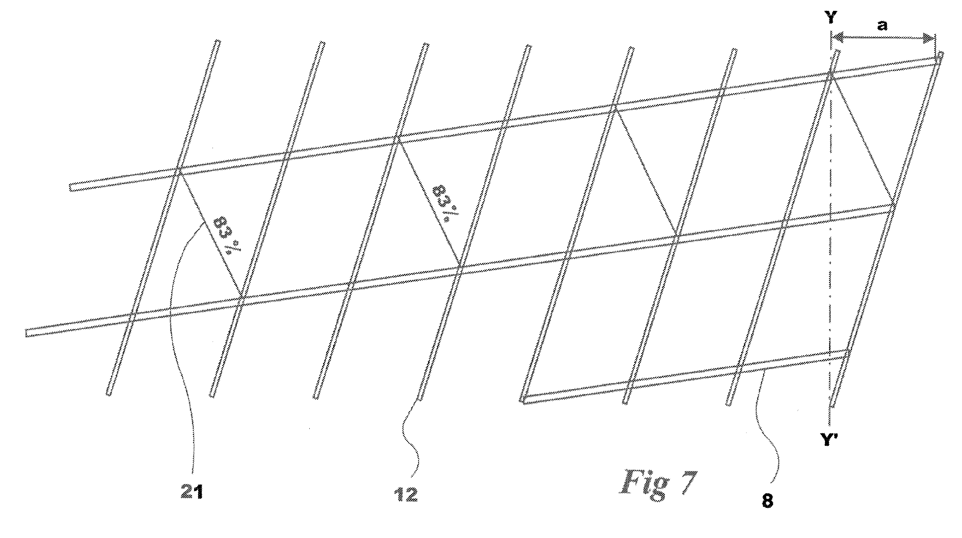

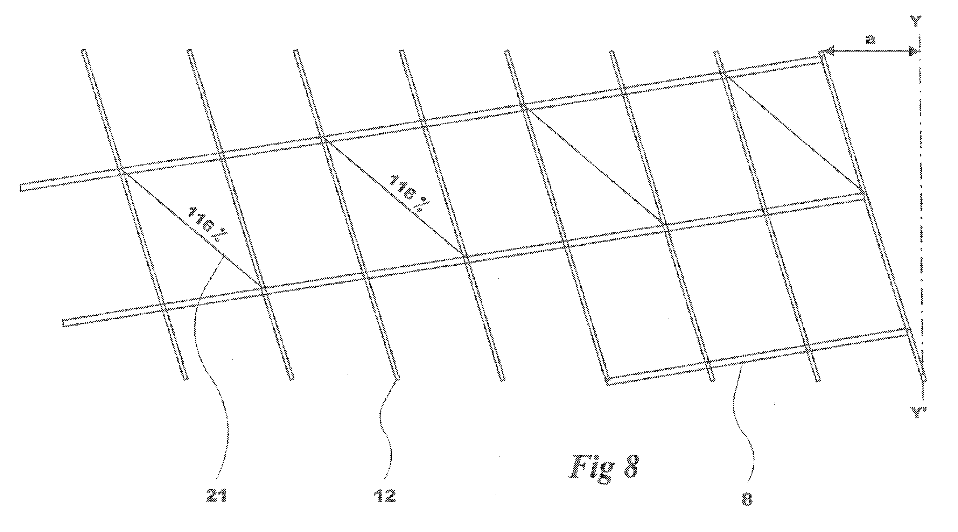

Le trajet d'un article se déplaçant le long de la piste 2 peut être décomposé suivant deux directions perpendiculaires entre elles, comme montré à la fig.2 . Une première direction L, dite « longitudinale » suit une courbe hélicoïde équidistante en chaque point de l'axe Z. Cette courbe L fait avec un plan horizontal un angle β, comme montré à la fig. 1. Une deuxième direction T, dite « transversale » est la génératrice d'une portion de cône d'axe central Z tangente à l'hélicoïde, qui fait avec un plan horizontal (voir fig. 1) un angle α.
Les deux angles de pente α et β sont liés au pas P de 1' hélicoïde et au diamètre de la piste 2, comme montré aux Fig. 3, 4, 6, 7 et 8.

Les valeurs respectives de α et β sont déterminées à la construction pour que lorsqu'un article ralentit ou, à la limite, s'arrête pour une raison quelconque, il dévie vers l'axe Z et soit évacué dans le puits central 4, évitant de devenir lui-même un obstacle au bon cheminement de l'ensemble du chargement.

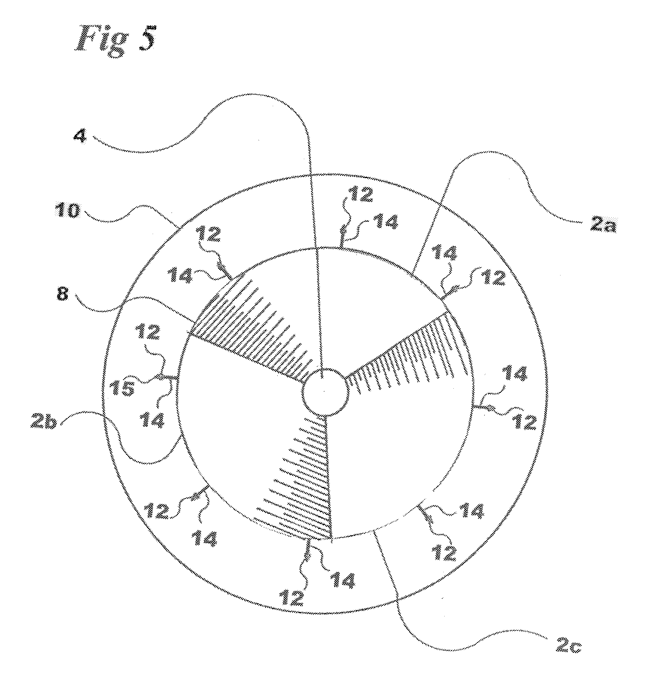

Bien que le dispositif représenté dans les figures ne comprenne qu'une seule piste hélicoïdale 2, il apparaît clairement que l'on peut placer dans le même dispositif deux voire trois pistes décalées angulairement 2a, 2b, 2c sans que celles-ci interfèrent les unes avec les autres (voir Fig. 5).

La piste 2 représentée sur les figures 1 et 2 comprend un rebord extérieur 8 destiné à limiter l'éjection vers l'extérieur d'articles ou de particules par trop véloces.

La présence d'un tel rebord 8 n'est cependant pas obligatoire et elle dépend essentiellement du type de produit transporté. Ce rebord 8 peut éventuellement être muni d'échancrures, de distance en distance, afin de favoriser le débordement.

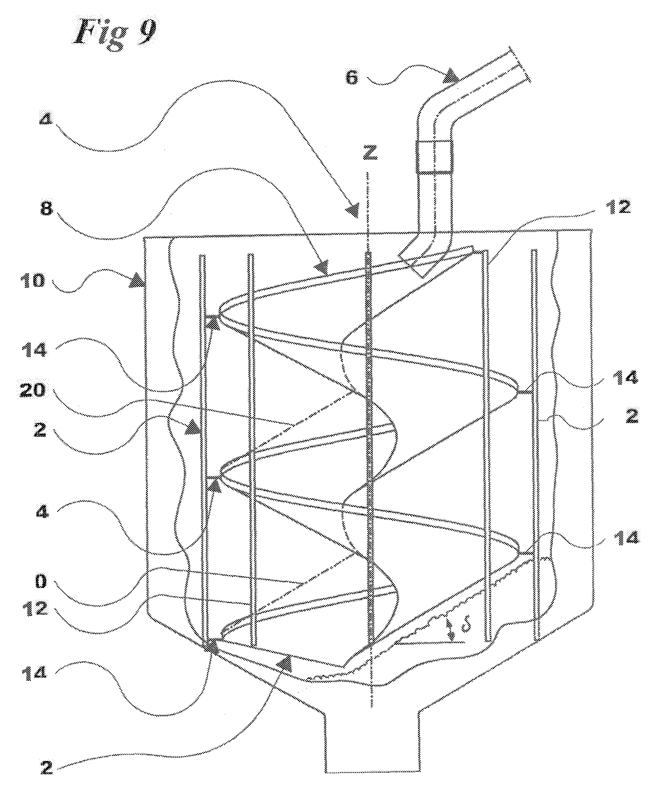

Un des inconvénients connus des toboggans hélicoïdaux est que les revers des hélicoïdes forment des "recoins" que les produits ou articles n'arrivent pas à combler. En effet, (voir Fig.9) tout empilement d'articles adopte spontanément, au repos, une forme conique 20 dont l'angle δ est une propriété mécanique caractéristique. Une proportion non négligeable du volume de stockage peut être perdue de cette façon.

Pour éviter l'apparition d'un tel phénomène, on attribue par construction à l'angle α une valeur supérieure ou égale à l'angle de repos δ des produits transportés, comme montré à la Fig. 9. De cette façon, on est certain que les articles ou produits amorçant un empilement combleront tous les volumes délimités par le revers des pistes 2.

Comme on peut le voir dans les Fig. 2 et 3, la largeur du toboggan est telle qu'il embrasse un volume largement comparable à celui du réservoir de stockage 10 dans lequel il est placé. Son diamètre peut en effet correspondre à 90 voire 95% de la largeur du réservoir 10. Cette disposition est particulièrement avantageuse pour le stockage et le transport de produits et d'articles fragiles. En effet, les pistes 2 jouent dans ce cas le rôle de baffles, reprenant la majeure partie du poids des articles qui y sont empilés. A l'intérieur du cylindre déterminé par le toboggan, la "pression" maximale exercée sur un article atteindra donc une valeur maximale correspondant à une hauteur d'un "pas" de 1' hélicoïde. Dans le cas d'articles particulièrement fragiles, on s'arrange pour que α ait une valeur légèrement inférieure à celle de l'angle de repos δ pour alléger les contraintes mécaniques pouvant résulter de l'élasticité de 1' hélicoïde.

La dispersion des caractéristiques des produits ou articles à transporter est évidemment telle qu'il semble pratiquement impossible de réaliser un toboggan réellement universel. Le toboggan de l'invention permet pourtant de se rapprocher autant que possible de cet idéal. En effet, dans un mode de réalisation avantageux, on a réalisé un soutènement des pistes permettant de modifier les angles α et β des pistes 2, avec pour conséquence que 1' hélicoïde peut être ajustée pour correspondre aux caractéristiques optimales pour l'un ou l'autre produit ou type de produit.

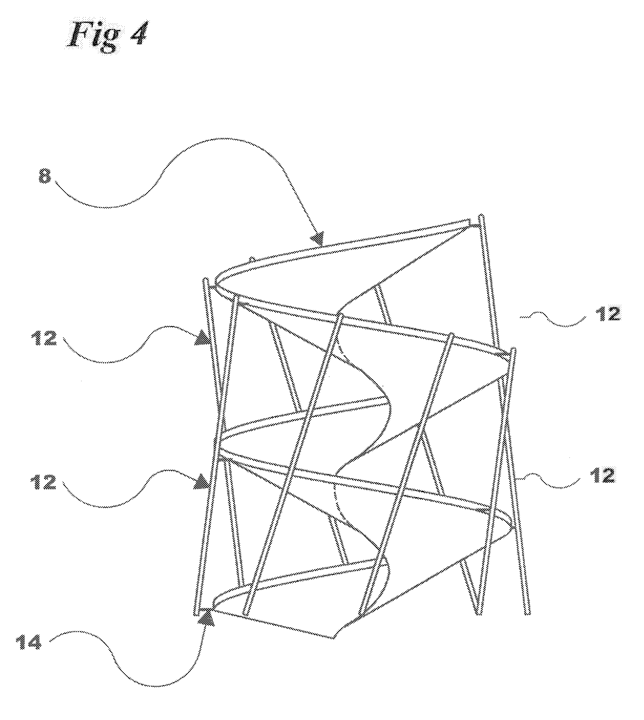

Comme on peut le voir sur les figures 2 et 3, la piste hélicoïde 2 est soutenue à intervalles angulaires réguliers par une série de tringles 12 disposées verticalement. Grâce à une liaison déformable 14 entre ces tringles 12 et le bord de la piste 2, il est possible d'incliner toutes les tringles 12 dans le même sens par rapport à leur position initiale, en provoquant ainsi soit un resserrement soit un étalement de la spirale (voir les Fig. 4 et 6, 7, 8), les pistes 2 étant réalisées dans un matériau doté d'une certaine capacité de déformation (tels que les matériaux plastiques, tôles d'acier inoxydable, etc.).

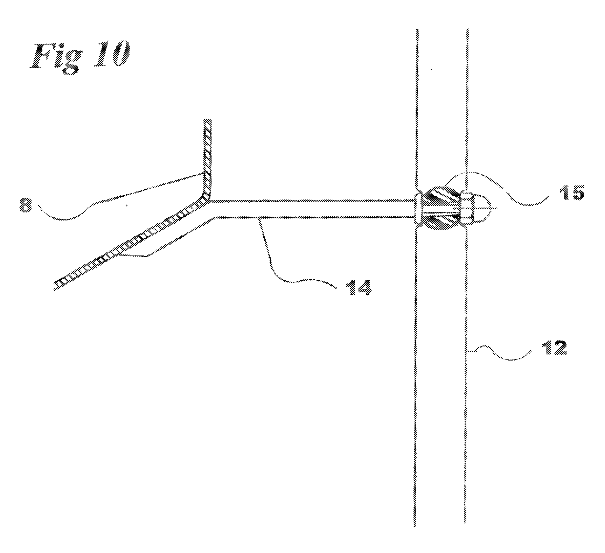

On peut citer comme liaison déformables des liaisons à rotule (voir Fig. 10) à bloc élastomère 15 ou des cylindres de torsion.

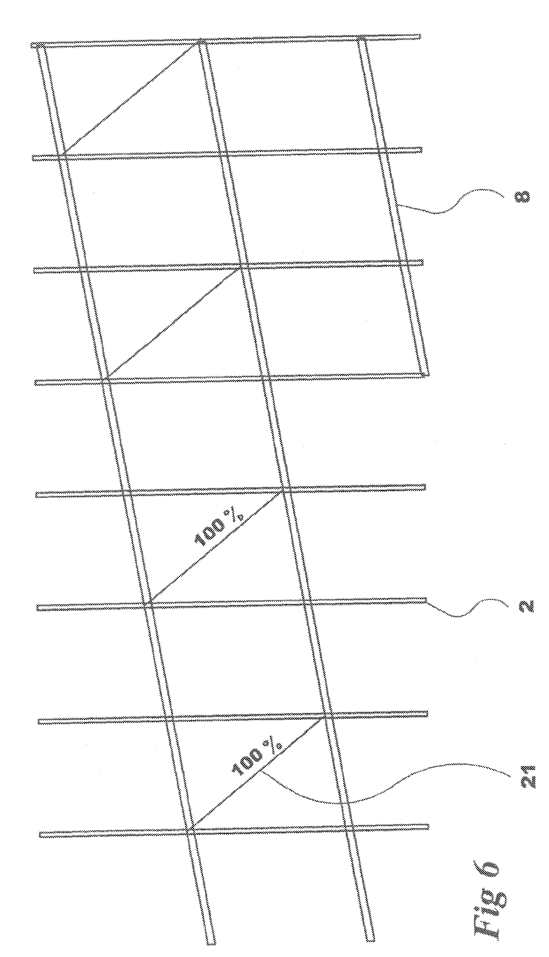

Lorsque l'angle d'inclinaison adéquat est obtenu, des entretoises 21 immobilisent la piste 2 et ses tringles 12 de soutènement dans leurs positions respectives (voir Fig. 6,7,8). Le resserrement de l' hélicoïde provoque une augmentation de l'angle α , son étalement ayant l'effet inverse. Le tableau suivant est donné à titre d'exemple.

| État hélicoïde | Diamètre | Angle α | Longueur entretoise 21 |
|---|---|---|---|
| resserré | 75 cm | 41.7° | 83% |
| normal | 80 cm | 37.4° | 100% |
| étalé | 85 cm | 32° | 116% |

Suivant un autre mode de réalisation, on peut se contenter de faire varier uniquement le pas (c'est à dire la distance entre les deux spires consécutives) en prévoyant des tringles formées d'éléments de longueur variable (tringles 12 télescopiques ou interchangeables).

On notera que la présence d'un puits central 4 facilite considérablement le nettoyage d'un réservoir 10 équipé du toboggan de l'invention, des éléments d'aspersion (têtes munies de gicleurs) pouvant y être facilement introduits.

Le toboggan de l'invention est avantageux non seulement au moment du transfert d'articles dans un conteneur, mais également comme élément permanent dans un conteneur, car il permet le stockage d'articles fragiles en grands volumes sans y provoquer de casse : du fait de la descente à vitesse contrôlée, du fait du rôle de support intermédiaire (baffle) joué par les pistes, du fait de la prévention de points d'accumulation durant le déversage par le bas du conteneur.

## Revendications

1. Un toboggan hélicoïdal de transfert de produits en vrac comprenant au moins une piste (2) hélicoïdale se développant autour d'un axe (Z) vertical **caractérisé en ce que**
- le volume central du toboggan est évidé en forme de puits (4)
- chaque piste (2) est continue et présente un pas en substance constant
- chaque piste (2) est inclinée transversalement en direction de l'axe (Z), l'angle d'inclinaison (α) de la piste (2) étant tel que les produits transférés, animés à la partie supérieure de chaque hélicoïde d'une vitesse suffisante pour que la force centrifuge les maintienne le long de la piste (2) correspondante, dévient vers l'axe (Z) lorsque la force centrifuge qui les maintient sur la piste (2) s'annule ou descend au-dessous d'une valeur critique.

2. Un toboggan hélicoïdal de transfert suivant la revendication 1 **caractérisé en ce qu'**il comprend au moins un dispositif de chargement (6) qui injecte le produit transporté quasi-tangentiellement à chaque piste (2) à la partie supérieure de chaque hélicoïde avec une vitesse suffisante pour que la force centrifuge maintienne le produit le long de la piste (2) correspondante.

3. Un toboggan hélicoïdal de transfert suivant la revendication 2 **caractérisé en ce que** chaque dispositif de chargement (6) comprend un tronçon vertical conférant la vitesse nécessaire au produit transporté.

4. Un toboggan hélicoïdal de transfert suivant l'une quelconque des revendications 1 à 3 **caractérisé en ce que** l'inclinaison transversale (α) de chaque hélicoïde est supérieure ou égale à l'angle de repos du produit transporté.

5. Un toboggan hélicoïdal de transfert suivant l'une quelconque des revendications précédentes **caractérisé en ce que** l'inclinaison du revers de chaque piste en hélicoïde est légèrement inférieure ou égale à l'angle de repos (δ) du produit transporté.

6. Un toboggan hélicoïdal de transfert suivant l'une quelconque des revendications précédentes **caractérisé en ce qu'**il est muni d'un mécanisme permettant de faire varier l'inclinaison transversale (α) de la piste (2) en hélicoïde.

7. Un toboggan hélicoïdal de transfert suivant la revendication 6 **caractérisé en ce que** ce mécanisme comprend des tringles (12) soutenant les pistes (2) en hélicoïde via des liaisons articulées (14) .

8. Un toboggan hélicoïdal de transfert suivant la revendication 7 **caractérisé en ce que** ce mécanisme comprend des tringles (12) dont la longueur est ajustable.

9. Un toboggan hélicoïdal de transfert suivant l'une quelconque des revendications précédentes **caractérisé en ce que** chacune des pistes en hélicoïde est munie d'un rebord extérieur (8).

10. Une enceinte de stockage (10) à vidange par le bas **caractérisée en ce qu'**elle est munie d'un toboggan hélicoïdal suivant l'une quelconque des revendications précédentes.
